# EUROPEAN PATENT APPLICATION

(11) **EP 3 757 815 A1**
(43) Date of publication of application: **30.12.2020**
(21) Application number: 19850450.8
(22) Date of filing: 24.06.2019
(51) Int. Cl.: G06F 16/215

(54) **DATA PROCESSING METHOD AND DEVICE, STORAGE MEDIUM, AND ELECTRONIC DEVICE**

(30) Priority: 16.08.2018 CN 201810935478
(71) Applicant: TENCENT TECHNOLOGY (SHENZHEN) COMPANY LIMITED, Shenzhen, Guangdong 518057 (CN)
(72) Inventor: LI, Haixiang, Shenzhen, Guangdong 518057 (CN); YE, Sheng, Shenzhen, Guangdong 518057 (CN)
(74) Representative: Eisenführ Speiser
(86) International application number: PCT/CN2019/092459
(87) International publication number: WO 2020/034757

(57) **Abstract**

A data processing method and device, a storage medium, and an electronic device. The method comprises: an electronic device acquiring at least one target row to be cleared at a target time in a data table of a row-based storage database (S202); storing a target attribute value recorded on the at least one target row into a target page of a line-based storage database (S204); and clearing the at least one target row after reaching the target time (S206). The method solves the technical issue in prior-art data processing technologies that historical data is difficult to trace.

## Description

### RELATED APPLICATION

This application claims priority to Chinese Patent Application No. 2018109354781, entitled "METHOD AND APPARATUS FOR DATA PROCESSING, STORAGE MEDIUM, AND ELECTRONIC APPRATUS" and filed with the China National Intellectual Property Agency on August 16, 2018, which is incorporated herein by reference in its entirety.

### FIELD OF THE TECHNOLOGY

The present disclosure relates to the field of computers, and in particular, to data processing technology.

### BACKGROUND OF THE DISCLOSURE

At present, data is usually stored in databases. A relevant operation is usually performed to eliminate history data in a database. Such manner of data processing results in missing of the history data in the database, and thereby it is difficult to trace the history data.

Currently, there is no effective solution for addressing the foregoing problem.

### SUMMARY

A method and an apparatus for data processing, a storage medium, and an electronic apparatus are provided according to embodiments of the present disclosure, in order to address at least a technical problem that it is difficult to trace the history data in conventional data processing technology.

In an aspect of embodiments of the present disclosure, a method for data processing is provided. The method is applied to an electronic apparatus, and includes: obtaining at least one target row that is to be cleared at a target time, from a data table of a row-based database; storing a target attribute value recorded in the at least one target row into a target page in a column-based database; and clearing the at least one target row at the target time.

In another aspect of embodiments of the present disclosure, an apparatus for data processing is further provided, including: a first obtaining unit, configured to obtain at least one target row that is to be cleared at a target time, from a data table of a row-based database; a storage unit, configured to store a target attribute value recorded in the at least one target row into a target page in a column-based database; and a clearing unit, configured to clear the at least one target row at the target time.

In another aspect of embodiments of the present disclosure, a storage medium is further provided. The storage medium stores a computer program, and the computer program when being executed is configured to implement the foregoing method for data processing.

In another aspect of embodiments of the present disclosure, an electronic apparatus is further provided, including a memory, a processor, and a computer program stored in the memory and executable by the processor. The processor is configured to perform the foregoing method for data processing through the computer program.

According to embodiments of the present disclosure, the to-be-cleared target row in the row-based database is dumped to the column-based database, so as to reserve history data. Specifically, the at least one target row to be cleared at the target time is obtained from the data table of the row-based database, the target attribute value recorded in the at least one target row is stored into the target page in the column-based database, and the at least one target row is cleared at the target time. Thereby, the data to be eliminated from the row-based database is dumped to the column-based database according to the foregoing row-column dump technology. Achieved are an objective of reserving history data in the database, and a technical effect of ensuring a complete track of data transition. Addressed is the technical problem that it is difficult to trace the history data in conventional data processing technology.

### BRIEF DESCRIPTION OF THE DRAWINGS

The drawings described herein are configured to provide further understanding of the present disclosure, and form a part of the present disclosure. Exemplary embodiments of the present disclosure and descriptions thereof are intended for explaining the present disclosure, and do not constitute any inappropriate limitation to the present disclosure. The drawings are as follows.
Figure 1 is a schematic diagram of an application environment of a method for data processing according to an embodiment of the present disclosure;
Figure 2 is a schematic flowchart of a method for data processing according to an embodiment of the present disclosure;
Figure 3 is a schematic diagram of a dump transition page according to an embodiment of the present disclosure;
Figure 4 is a schematic diagram of another dump transition page according to an embodiment of the present disclosure;
Figure 5 is a schematic diagram of another method for data processing according to an embodiment of the present disclosure;
Figure 6 is a schematic diagram of another method for data processing according to an embodiment of the present disclosure;
Figure 7 is a schematic diagram of another method for data processing according to an embodiment of the present disclosure;
Figure 8 is a schematic diagram of another method for data processing according to an embodiment of the present disclosure;
Figure 9 is a schematic flowchart of another method for data processing according to an embodiment of the present disclosure;
Figure 10 is a schematic flowchart of another method for data processing according to an embodiment of the present disclosure;
Figure 11 is a schematic structural diagram of an apparatus for data processing according to an embodiment of the present disclosure; and
Figure 12 is a schematic structural diagram of an electronic apparatus according to an embodiment of the present disclosure.

### DESCRIPTION OF EMBODIMENTS

For those skilled in the art to better understand solutions of the present disclosure, hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Terms such as "first" and "second" in the specification, the claims and the accompanying drawings of the present disclosure are intended to distinguish between similar objects, but do not necessitate a specific sequence or order. It should be understood that the data termed in such a way are interchangeable in proper circumstances, so that embodiments of the present disclosure described herein can be implemented in an order besides the order illustrated or described herein. In addition, the terms "include", "comprise" and any other variants are intended to cover the non-exclusive inclusion. For example, a process, a method, a system, a product, or a device that includes a series of steps or units may not be limited to the steps or units expressly listed, and may include other steps or units not expressly listed or inherent to such process, method, product, or device.

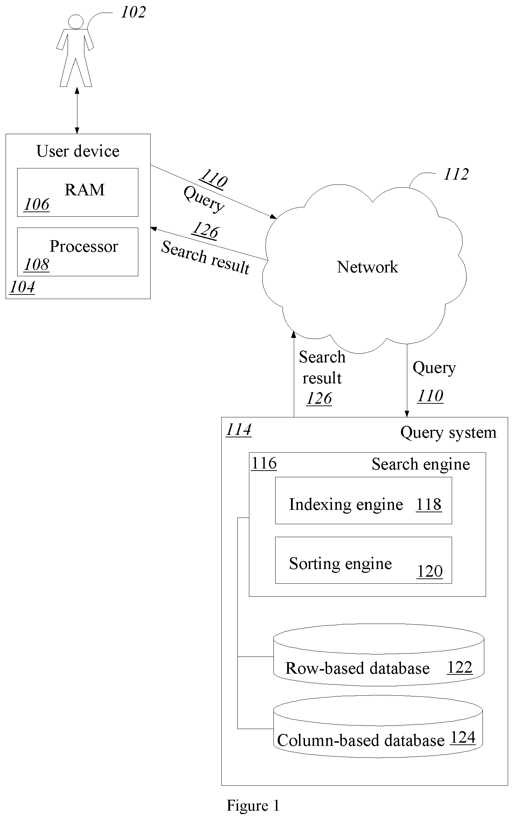

In an aspect of embodiments of the present disclosure, a method for data processing is provided. In an optional embodiment, the method for data processing may be applied, but is not limited, to an application environment as shown in Figure 1. As shown in Figure 1, a user device 104 used by a user 102 includes a random access memory (RAM) 106 and a processor 108. The user 102 may use the user device 104 to transmit a query request 110 to a query system 114 via a network 112. A search engine 116 in the query system 114 includes an indexing engine 118 and a sorting engine 120. After receiving the query request 110, the query system may query a row-based database 122 and a column-based database 124 according to the query request 110, so as to obtain a query result 126 and return the query result 126 to the user device 104 via the network 112.

In data processing of the query system 114, each node device in the system may obtain at least one target row to be cleared at a target time from a data table of the row-based database 122, store a target attribute value recorded in the at least one target row into a target page in the column-based database 124, and clear the at least one target row at the target time.

In an optional embodiment, the user device 104 may include, but is not limited to, a mobile phone, a tablet computer, a desktop computer, and the like. The query system 114 may include, but is not limited to, at least one of: a distributed database system (each node device thereof uses a method for data processing according to embodiments of the present disclosure), a relational database system based on multi-version concurrency control (MVCC), a non-relational database system based on the MVCC, or the like. The network may include, but is not limited to, a wireless network or a wired network. The wireless network includes Bluetooth, WIFI, or another network implementing wireless communication. The wired network may include, but is not limited to, a local area network, a metropolitan area network, or a wide area network. The query system may include, but is not limited to, at least one of: a personal computer (PC), or another device for a computing service. The above description is merely exemplary, and this embodiment is not limited thereto.

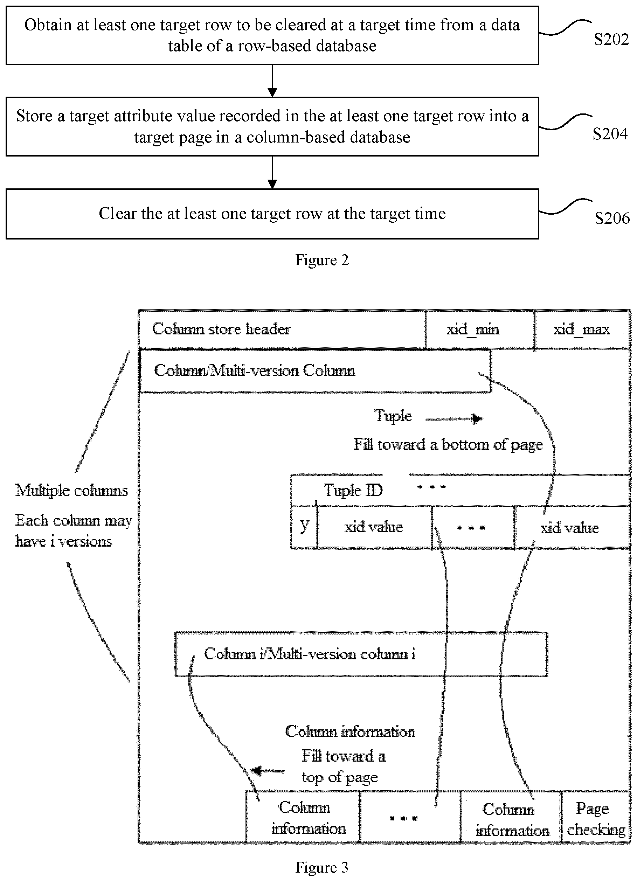

An optional embodiment is as shown in Figure 2. The method for data processing is applied to an electronic apparatus, and the electronic apparatus may be a terminal device or a server. The method for data processing may include following steps S202 to S206.

In step S202, at least one target row to be cleared at a target time is obtained from a data table of a row-based database.

In step S204, a target attribute value recorded in the at least one target row is stored into a target page in a column-based database.

In step S206, the at least one target row is cleared at the target time.

In an optional embodiment, the method for data processing may be applied, but is not limited, to application scenarios of recording user behaviors, recording accounting changes of an account, recording stock exchange records, recording meteorological monitoring data, or another scenario where a data change history needs to be recorded.

The scenario of recording accounting changes of an account is taken as an example. A user performs operations, such as charging and consumption, on an online account of the user. In a case that information of the account merely records a current balance in the account, the user may be unable to learn about a reason and an occurrence time of an accounting problem, because a history change in accounting cannot be queried. All change information of the account may be dumped with the method of data processing according to embodiments of the present disclosure. In such case, all transaction states from opening to closing of the account may be recorded. Once there is an accounting problem, the problem can be immediately tracked and positioned according to the recorded information of history changes in the accounting. In a specific embodiment, the server may obtain at least one target row (the information of history changes in the accounting) to be cleared at a target time from a data table (which stores accounting information of a user) of a row-based database, store a target attribute value recorded in a target column of the at least one target row into a target page in a column-based database, and clear the at least one target row at the target time. The target attribute values in the at least one target row, which are recorded in a particular target column, may be recorded in at least one target page in the column-based database.

In conventional technology, history data in the database is generally eliminated directly. Data change history is of great significance in many scenarios. For example, a bank monitors history bill change information of a depositor, a meteorological department monitors weather change information, and a stock market displays history transaction information. A method for data processing in conventional technology results in missing of history data in the database, and thereby it is difficult to trace the history data. According to embodiments of the present disclosure, the at least one target row to be cleared at the target time is obtained from the data table of the row-based database, the target attribute value recorded in the at least one target row are stored into the target page in the column-based database, and the at least one target row is cleared at the target time. Thereby, the history data in the database is reserved, and completeness of change information of the history data is ensured. The technical problem that it is difficult to trace the history data in conventional data processing technology is addressed.

In an optional embodiment, to-be-dumped data in the row-based database (also know as as a row store database) may be located in internal memory of a node device. Data (for example, data of the latest version) in a data table is stored in a row-based manner in the row store database. The row store database may include, but is not limited to, a PostgreSQL, a MySQL, or the like. In the row store database, data is updated in a manner of periodic triggering or event triggering. Types of attributes in a row may be different from each other, and thereby different column widths (that is, a size of a column) need to be assigned to different attributes. Due to the different types of attributes, rows are required to be aligned with each other.

In an optional embodiment, a track of a data lifecycle may be identified by a status attribute of data. A data lifecycle may be divided into three stages. Each stage describes a different status attribute of the data, so as to identify a state in the track of the data lifecycle. The status attributes corresponding to the three stages are a current state, a historical state, and a transitional state..
(1) The current state is a state of data in a current stage. Data in the current state is the latest version of a data item.
(2) The historical state is a state of data in a history stage. A value of data in the history state is an old value instead of a current value. There may be multiple history states of a data item, which reflect a process of a status change of the data. The data in the history state can only be read, and is not allowed to be modified or deleted.
(3) The transitional state is a state of data in transition from the current state to the history state. Data in the transitional state (called half-life data) is neither the latest version nor a history-state version of a data item. Instead, the data in the transitional state is in a process of changing from the current state to the history state.

Such three states cover the entire lifecycle of a data item, and are together referred to as a data full-state. A data item provided with the three states is called full-state data. All three states of data exist under a Multi-Version Concurrency Control (MVCC) mechanism. Only the history state and the current state of data exist under a non-MVCC mechanism.

For example, there is an account table Account (ID int, Name char (8), Balance int, Note text). The account table includes four attribute columns, i.e. account, name, balance, and note. The table is configured to record a change of a balance in a user account. A record (corresponding to a row in the account table) is generated in response to a change in the balance. Currently, user data is (10, James, 1000, Create account). There is a change of the balance in the user account, where the balance is reduced by 100, and 'consume 100' is indicated in the column "Note". In such case, an update operation needs to be performed on the database. Data of the latest version stored in the row store database is (10, James, 900, consume 100), which is the current-state data. (10, James, 1000, Create account) is data of the transitional state data during updating to the data of the latest version. (10, James, 1000, Create account) is data of the history state after the updating is completed.

In an optional embodiment, the data may have a bi-temporal attribute, i.e. a valid time attribute and a transaction time attribute. The valid time attribute represents a condition, about a temporal attribute, of an object represented by the data. For example, Kate went to middle school from 2000-09-01 to 2003-07-30, and such period is a valid time. The transaction time attribute represents at a moment when a specific state of the data occurs, and the data has a temporal attribute of the moment, that is, when and what operation is performed by a database. An operation is encapsulated as a transaction within a database system, and the transaction has atomicity. A transaction identifier may be configured to identify the transaction time attribute of data. The valid time attribute and the transaction time attribute are embodied in forms as user-defined common fields in a data model, and are described by specific keywords, allowing a database engine to perform constraint checking and assignment.

In this embodiment, the at least one target row to be cleared at the target time in the data table of the row-based database may be obtained. In an optional embodiment, one to-be-cleared target row in the data table of the row-based database may be obtained, or multiple to-be-cleared target rows in the data table of the row-based database may be obtained. Usually, it is required to obtain multiple target rows.

In a specific embodiment, the to-be-cleared target row in the data table of the row store database may be identified by setting a ready-to-clear identifier in the row store database, or to-be-cleared target row in the data table of the row store database may be identified by placing the to-be-cleared target row at a specific storage location. Alternatively, the to-be-cleared target row in the data table of the row store database may be identified in another manner.

For example, when performing a data update operation, a database supporting the MVCC generates old data of multiple versions, that is, generates data of the history state in a full-temporal data model. Such data is deleted at regular intervals in a conventional database management system. When performing an update/delete operation, the row store database makes a ready-to-clear mark instead of eliminating existing data directly. In the PostgreSQL, a VM file is configured for each table to identify an expired tuple. In the MySQL, a history list of the MVCC is applied to identify an expired tuple. Multi-version data of the PostgreSQL is stored in a data page, and multi-version data of the MySQL is stored in an UNDO rollback segment.

In an optional embodiment, history data (data of the history state, that is, the to-be-cleared target row) in the row store database may be eliminated in various manners. A clear operation may be performed periodically, may be triggered by an event (upon receiving a clear instruction), or the like. The target time is determined according to the manner of clearing the history data, which is not limited in this embodiment.

For example, when the PostgreSQL performs a VACUUM operation, the expired tuple is eliminated for each table according to the VM file. A Purge thread of the MySQL scans the history list of the MVCC, and eliminates expired data that is not referenced by another transaction and does not need rollback. The VACCUM operation of the PostgreSQL and the Purge operation of the MySQL are periodically performed by default. History data of information changes, such as data related to accounting issues, is equally important as current data. Therefore, it is desired to reserve the history data, instead of eliminating the history data.

In an optional embodiment, the to-be-cleared target row may be obtained before the target row is cleared. That is, before the to-be-cleared target row is cleared, the to-be-cleared target row may be first obtained, and then an operation of clearing the to-be-cleared target row is performed. The to-be-cleared target row may be obtained based on a timing mechanism (obtained periodically). A period of timing may be a parameter for dynamic adjustment, which is not limited in this embodiment.

For example, a dump process may be performed before the VACUUM operation in the PostgreSQL, and the VACUUM operation dumps a version of the history state instead of eliminating the version of the history state. A dump process is performed before the Purge operation in the MySQL.

In an optional embodiment, the to-be-dumped data in the row store database may be located in an internal memory of a target device (for example, a network-element node). A position of the row store database is not specifically limited in this embodiment.

In an optional embodiment, the target attribute values of the target row, which are recorded in a target column, may be stored into one or more target pages in the column-based database. The target attribute values recorded in a particular target column of the target rows are recorded in at least one of multiple target pages in the column-based database.

In an optional embodiment, the target column may be an attribute column in the data table of the row store database. Multiple target columns herein may refer to all attribute columns of the data table, or may be a subset of all attribute columns of the data table. The multiple target columns may be designated by a target parameter. Attributes recorded in different target columns may be of a same type or different types. Target columns for different attribute types may be assigned with a same column width or different column widths. Target columns for a same attribute type may be assigned with a same column width or different column widths. The attribute column may be specifically configured on requirement, which is limited in this embodiment.

For example, the multiple target columns in an account table Account (ID int, Name char (8), Balance int, Note text) may be all columns or some columns (for example, ID, Balance, Note) in the account table.

In an optional embodiment, a target attribute value recorded in the target column is read from the obtained target row, after the to-be-cleared target row is obtained. The target attribute values in the particular target column, which correspond to different target rows, may be same or different.

In an embodiment, a persistent part of data in the column-based database (the column store database) may be located in an external memory (such as a disk) of a target device, and the other part of data may be located in an internal memory of the target device. A position of the column store database is not specifically limited in this embodiment. Generally, a column store database stores data with a super-large scale. An excellent manner of data storage is a foundation for efficient usage of space and improvement of a query speed. Column-based storage applies a structure of segmentation paging management, and can utilize a table space and other concepts effectively, so as to store column-based data continuously into an external memory during dumping. Thereby, it is convenient to perform column-based calculation on in the column-based storage.

In an optional embodiment, there may be multiple target rows. When multiple target columns for the multiple target rows are stored into the target page in the column store database, the target attribute values, which are recorded in a particular target column of the multiple target columns, within the multiple target rows may be recorded in at least one target page in the column store database.

In an optional embodiment, the target attribute value recorded in the at least one target row may be stored in various manners into the target page in the column store database.

In an optional implementation, the target attribute values recorded in different target columns within the multiple target rows may be directly stored into one or more pages in the column-based database.

In an optional embodiment, the target attribute values recorded in the multiple target columns within the multiple target rows may be sequentially written into one of the target pages according to a sequence of columns in the data table, and written into another page after such target page is full. Alternatively, the target attribute values recorded in different target columns within the multiple target rows may be stored into different pages, respectively, of the target pages.

In an optional embodiment, target attribute values (first target attribute values) of the multiple target rows are recorded in each target column. In a case that a first page of the target pages is fully filled with a part of first target attribute values, the first target attribute values other than those which have been written into the first page are stored into a second page of the target pages.

A page may not be fully filled and thereby a storage space may be wasted, when the target attribute values recorded in the multiple target columns within the multiple target rows are directly stored into one of the target pages in the column store database.

In an optional embodiment, in a case that the column store database is located in an external memory, a half-filled page may be loaded from the external memory into an internal memory, and new data may be saved into the half-filled page, so as to fully utilize storage space (such as disk space) and ensure that each of the target pages in the column store database is fully filled.

In another optional implementation, the target attribute values recorded in the target column within the multiple target rows may be stored into a dump transition page, and attribute values recorded in the dump transition page are stored into the target page. The dump transition page is configured to dump attribute values recorded in the target column to the target page in the column-based database.

In an optional embodiment, in a case that the column store database is located in an external memory, the dump transition page may be set in an internal memory, and the attribute values recorded in the target column is transited from the row store database to the column store database via the dump transition page, so as to avoid frequent read/write operations on the external memory.

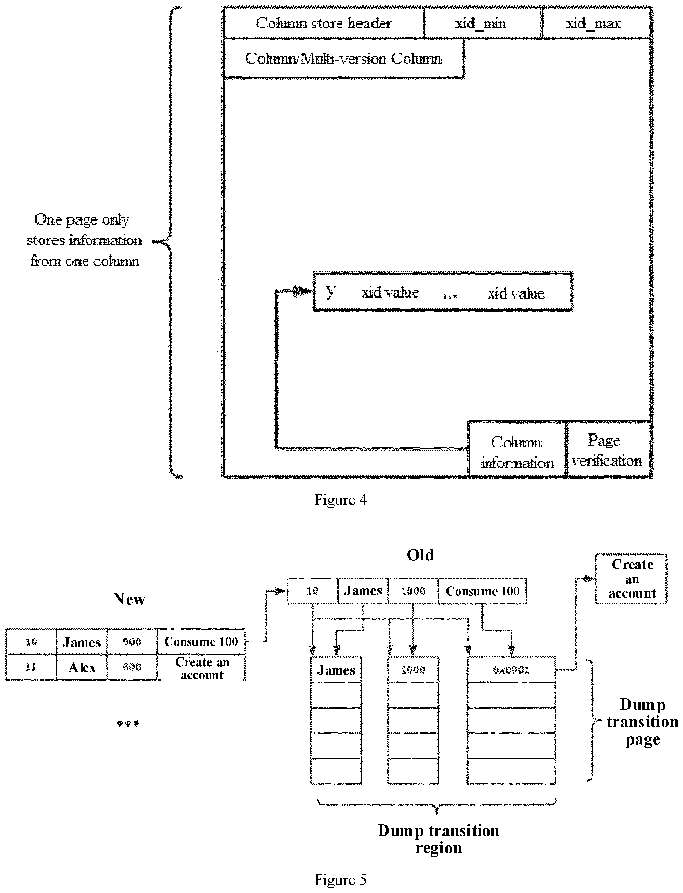

A dump operation may be performed through the dump transition page in various manners. In a specific embodiment, the target attribute values recorded in the target column may be dumped to a same dump transition page (for example, a dump transition page in a form of a page A as shown in Figure 3), or the target attribute values recorded in different target columns may be dumped to different dump transition pages (for example, dump transition pages in a form of a page B as shown in Figure 4, where the page B may be considered as a variation of the page A). Thereby, the dump transition page may be directly dumped to the target page. Alternatively, multiple dump transition pages may be compressed in a manner of estimated compression, and the compressed dump transition pages are dumped to the target pages.

In an optional implementation, the target attribute values recorded in the target column within the multiple target rows may be stored into the dump transition page based on rows (in a same manner of data storage as the data table). It may be determined whether a predetermined condition is met, before, while, or after the target attribute values recorded in the target column within the multiple target rows are stored into the dump transition page by rows. The attribute values are dumped to the target page in response to the predetermined condition being met.

In an optional embodiment, it is determined whether the attribute values meet a first condition may be determined. In a case that the attribute values meet the first condition, the attribute values that meet the first condition in the dump transition page are stored into one of the target pages in the column store database. The first condition may include, but is not limited to, the following two conditions. A data amount of first K rows of the attribute values recorded in the dump transition page is less than or equal to a target threshold, and a data amount of first (K+1) rows of the attribute values is greater than the target threshold, where the target threshold may be set according to a size of the one of the target pages. First L rows of the attribute values recorded in the dump transition page are compressed based on separate columns, where a total amount of compressed data obtained from the compression is estimated to be less than or equal to the target threshold, and first (L+1) rows of the attribute values are compressed based on separate columns, where a total amount of compressed data obtained through the compression is estimated to be greater than the target threshold. Both K and L are positive integers greater than or equal to 1.

For example, 100 rows of attribute values are recorded in the dump transition page, and each row of data includes five attribute values. In a case that a total data amount of the first 20 rows of attribute values is less than 2 KB (the target threshold, which is a size of an external memory page) and a total data amount of the first 21 rows of attribute values is greater than 2 KB, the first 20 rows of the attribute values are stored into one page in the column store database. As another example, an estimated total amount of compressed data is less than 2 KB after compressing the first 80 rows of the attribute values based on separate columns (5 columns are separately estimated), and an estimated total amount of compressed data is greater than 2 KB after compressing the first 81 rows of the attribute values based on separate columns. In such case, the first 80 rows of the attribute values are stored into one page in the column store database, after being compressed based on columns.

In an embodiment, it may be further determined whether a second condition is met. In a case that the second condition is met, the attribute values in the dump transition page which are from the target columns and meet the second condition are stored into the separate target pages in the column store database. The second condition may include, but is not limited to, a following condition. First M rows of the attribute values recorded in the dump transition page are compressed based on separate columns, where it is estimated that compressed data with a maximum data amount among all compressed data obtained through the compression is less than or equal to a target threshold, and first (M+1) rows of the attribute values are compressed based on separate columns, where it is estimated that compressed data with a maximum data amount among all compressed data obtained through the compression is greater than the target threshold. M is a positive integer greater than or equal to 1.

For example, 100 rows of attribute values are recorded in the dump transition page, and each row of data includes five attribute values. It is estimated that compressed data with a maximum data amount among all compressed data obtained through the compression is less than 2 KB after the first 90 rows of the attribute values are compressed based on separate columns, and it is estimated that compressed data with a maximum data amount among all compressed data obtained through the compression is greater than 2 KB after the first 91 rows of the attribute values are compressed based on separate columns. In such case, the first 90 rows of the attribute values are compressed based on separate columns, and are stored into five pages in the column store database.

In another optional implementation, the target attribute values recorded in each target column within the multiple target rows may be independently stored in a dump transition page corresponding to such target column. Each dump transition page records the attribute values recorded in a target column, and each target column may correspond to one or more dump transition pages.

In an optional embodiment, the dump transition pages corresponding to different target columns are same in size. An amount of data capable to be recorded in the dump transition pages are related to an attribute type corresponding to the target column. An attribute type corresponding to the target column may be a digit, a character, a character string, or the like. Generally, a same dump transition page is capable to record more digits than character strings. A format and a size of the dump transition page are the same as those of the target page.

In an optional embodiment, a format of the dump transition page may include a page body section configured to record the attribute values from the target column. The format may include one or both of a page header and a page footer. The page header is configured to representing an identifier value range corresponding to a target identifier, and the target identifier correspond to the attribute values recorded in the dump transition page. The page footer is configured to verify the dump transition page.

Hereinafter the dump transition page is described in conjunction with a following example. The format of the dump transition page is same as that of a column store page. As shown in Figure 3, the format of the dump transition page is a default design format for the column store page, in which a page includes information from multiple columns and is referred to as a page A. As shown in Figure 4, the format of the dump transition page is an optional design format for the column store page, in which a page includes information from only one column and is referred to as a page B. There is no structural difference between the page B and the page A, except that the page A includes information of multiple columns while the page B includes information of only one column. The design of the page A is more consistent with a habit of row-based storage, providing a simple storage of the to-be-dumped data and a higher dumping efficiency. In such design, frequent page-crossing may occur when querying a column, affecting query efficiency. The design of the page B requires splitting the to-be-dumped data first, resulting in low dumping efficiency. In such design, frequent page-crossing can be avoided to the most extend when querying a column, and thereby the query efficiency is high. Before dumping, a user may first select a type of the dump transition page by adjusting a parameter, and the format of the page A may be adopted by default.

The format of a dump transition page may include three sections: a page header, a page body, a page footer.

(1) The page header (column-based storage header) is designed as an adaptive page header.

In a case that no index is defined in the data table by a user, the page header includes XID_min and XID_max by system default (where XID refers to a transaction ID, which identifies uniquely correspondence among attribute values from a same target row, that is, identifies uniquely column versions corresponding to the attribute values). XID_min represents a minimum XID of all column versions in this page, and XID_max represents a maximum XID of all the column versions in this page.

In a case that an index is defined in the data table by a user, XID information in the page header may be replaced with corresponding index information, such as ID Max and ID Min.

In such manner, a column store index may be constructed for the column store page (the target page), to help position column information quickly.

(2) The page body includes column versions (attribute values) of one or more of the multiple target columns. By default, each column version is represented by a 2-tuple {XID, value}, to indicate which transaction operates the value. In a case that header information is customized by the user, the 2-tuple is replaced accordingly, for example, replaced with {ID, value}.

As shown in Figure 3, the page body of the page A includes information from multiple columns, and information from each column includes multiple column versions. The columns are sequentially stored from the page header to the page footer. Each column includes a column ID, which represents a specific column. There are multiple tuple columns, which represent a unique tuple. Each tuple column includes a tupleID, which represents a unique tuple column. y indicates a quantity of versions in the tuple column. A combination of the tupleID, y, and the column version is capable to represent a process of history changes of attribute values from a column in a tuple in the data table.

As shown in Figure 4, the page body of the page B includes multiple column versions from one column, and the column versions are sequentially stored from the page header to the page footer. For the column, there may be multiple tuple columns, which represent a unique tuple. Each tuple column includes a tupleID, which a unique tuple column. y indicates that a quantity of versions in the tuple column. A combination of the tupleID, y, and the column version is capable to represent a process of history changes of attribute values from a column in a tuple in the data table

(3) The page footer is located at a bottom of the page, and includes page verification information and column information.

The column information in the page footer of the page A is of multiple columns. As shown in Figure 4, the column information in the page footer of the page B is of one column. The column information includes an ID of the column and an offset of the column in the page. The column information is sequentially stored from the page footer to the page header. Thereby, a process of information storage is performed from two ends to the middle (where the column versions in the page body are sequentially stored from the page header to the page footer, and the column information is sequentially stored from the page footer to the page header), until space remaining in the middle is not capable to accommodate a next column and next piece of column information.

In an optional embodiment, a dump transition page may be created for each column in a memory data table, the dump transition page corresponds to one target column in the data table, and different attribute values in one target column may be located in different dump transition pages. When a dump occurs (i.e. data is dumped from a row store database to a column store database), the data is first written into the dump transition page. In a case that the dump transition page is not fully filled, data is continued to be written into such dump transition page when a next dump occurs. A collection of the dump transition pages belonging to a same table may be referred to as a dump transition region.

Hereinafter the dump transition region is described in conjunction with an example. As shown in Figure 5, history data is (10, James, 1000, Create account). "James", "1000", "Create account" and the ID " 10" are separately written into different dump transition pages, and a collection formed by multiple dump transition pages corresponding to the same data table is a dump transition region.

In an optional embodiment, it may be determined whether a target condition is met, before, while, or after the target attribute values recorded in the target columns of the multiple target rows are stored into the separate dump transition pages corresponding to the target columns. In a case that the target condition is met, the attribute values are dumped to the target page.

In an optional embodiment, in a case (which is the target condition) that the dump transition page is fully filled with all or some of the target attribute values recorded in a particular target column within the multiple target rows, the attribute values recorded in the dump transition page that is fully filled are stored into a third page of the target pages. The attribute values recorded in the dump transition page include the target attribute values of the multiple target rows, which are in the particular target column and are written into the dump transition page.

In an optional embodiment, the dump transition page and a page in the column store database may be same in format, and therefore the attribute values in the fully-filled dump transition page may be directly written into the page in the column store database.

In an optional embodiment, storing the attribute values recorded in the dump transition page into the third page of the target pages includes following steps. Header information of the dump transition page is determined. The header information and the attribute values recorded in the dump transition page are stored into the third page of the target pages. The header information is configured to identify an identifier value range of a target identifier corresponding to the attribute values recorded in the dump transition page. The range of the target identifier corresponding to the attribute values, from the target column, which are stored in the third page can be quickly determined from the header information, which facilitates fast positioning during a subsequent query.

In an optional embodiment, the target identifier may be implemented in various forms, which may include, but are not limited to, a version identifier or information of a constraint column. The version identifier is configured to identify column versions uniquely from the multiple target columns. The constraint column is a predetermined column selected from the multiple target columns.

In an optional implementation, the target identifier may be the version identifier, as shown in Figure 3 or Figure 4. In such case, the header information may include a maximum value and a minimum value of the version identifier, which correspond to the attribute values recorded in the dump transition page. The version identifier is configured to identify uniquely the column versions, which are from the target column, within the multiple target rows. The version identifier may include, but is not limited to, a transaction ID or a user-defined index identifier. Because the XID is unique, the dump transition page in the internal memory and multiple column store pages located in the internal memory may be managed based on HASH.

In an optional embodiment, it is not necessary to put a specific limitation regarding temporal-related data on the dump transition page, as long as the data of the history state is ensured to be sequentially written into the dump transition page. A bank service is taken as an example. Queried are all transaction records of a specific sub-branch in a specific year, which is a temporal-related case. In order to facilitate querying, similar records are required to be continuously stored in a chronological order.

In another optional implementation, the target identifier is an attribute (for example, "location" or "temperature") of the constraint column. In such case, the target identifier in the header information of the dump transition page is information of the constraint column. The header information may include one or more key-value pairs, and each key-value pair includes an attribute value from the constraint column (a first target column within the multiple target rows) and a page offset corresponding to such attribute value from the constraint column. Such attribute value from the constraint column corresponds to a column version of an attribute value from a target column (a second target column within the multiple target rows) stored in the dump transition page. The attribute values from target column that corresponds to such attribute value from the constraint column are continuously stored in the dump transition page. The page offset is an offset for a storage location of the attribute values from the target column in the dump transition page. The dump transition page corresponds to such attribute value from the constraint column. The page offset may be an offset of the storage location of the attribute values from the target column with respect to a storage location of attribute values from the constraint column.

The above dump transition page may be applicable to data distributed with a high degree of aggregation. That is, information of the constraint column (for example, an ID) is distributed in batches. In case of finding an ID, the consistent IDs are continuously distributed thereafter. Only a few IDs are included in one page.

Hereinafter meteorological monitoring data is taken as an example. A meteorological station updates temperature information every 5 minutes, and the temperature information are gathered to a meteorological center. Temperature changes monitored by the meteorological station within one day need to be queried. Such case is relevant to a region of data distribution, and it is improper to store data in the chronological order. Instead, storage needs to be consistent with the data distribution.

In an optional embodiment, a unique constraint element (an attribute value from the constraint column) in a page may be called an Item. Hence, only the key-value pair such as <Item, page offset> is included in the page header. Such data structure formed by a data name (the constraint element) and an address of the page offset is called an Item Map. The Item Map is written into the page header of the external memory.

In an optional embodiment, "interval writing" may be adopted when dump data is written into the dump transition page. The interval writing refers to a following manner. After a piece of history-state data is written into the dump transition page, multiple blank rows are reserved for subsequent insertion of history-state data (history-state data corresponding to a same constraint element) of a same constraint element (for example, a primary key), and recorded data for a different constraint element is inserted after the multiple blank rows. A size of space of the rows is determined by a size of space occupied by the first value of each interval. A parameter k is configured for the interval, that is, an interval of k rows is tolerated. A value of k is set according to an applied modification frequency, and a default value is 10.

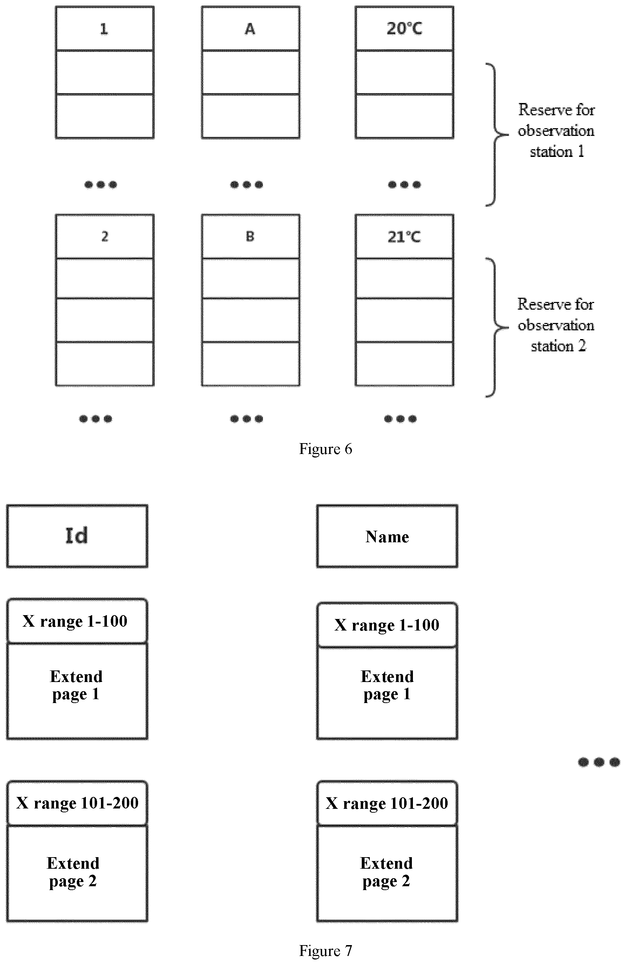

For example, a meteorological bureau in a city administers N meteorological observation stations. An air temperature table Temp (ID int, Location char (8), Temperature int) is configured to record real-time air temperatures, where the recorded attributes include an observation station identifier, a location, and a temperature. In such table, both ID and Location may serve as constraint columns. Thereby, a writing order in the dump transition pages is as shown in Figure 6 (which shows the dump transition pages corresponding to "ID", "Location", and "Temperature"). After data from an observation station with an ID "1" is written, data of an observation station with an ID "2" is written after an interval of n rows, where a value of n is set by a parameter. Hence, data belonging to a same constraint element is aggregate, and can be sequentially read in a query, thereby improving query efficiency.

In an optional embodiment, during a copy operation from the dump transition page to a common column store page (the target page in the column store database), the attribute values recorded in the dump transition page may be directly copied to the common column store page. Alternatively, the attribute values recorded in one or more dump transition pages corresponding to the same column may be compressed in units of pages and then copied to the common column store pages, so as to save storage space.

In an optional embodiment, information from multiple target columns is stored in the same dump transition page (for example, the page A). In such case, a compression rate of each target column in the dump transition page may be estimated first. After a sum of estimated amounts of compressed data of all target columns is calculated, it is determined according to the total amount of compressed data whether a dump operation can be performed. In a case that information from only one target column is stored in each dump transition page (for example, the page B), compression rates of the dump transition pages corresponding to the target columns may be separately estimated, and dump operations are performed according to the compression rates, respectively. A column store page (with a format of the dump transition page) may be selected before the dump operation starts.

In an optional embodiment, an estimated total amount of compressed data, after data of each dump transition page is compressed in a target compression manner, may be determined. Each dump transition page stores attribute values corresponding to the target column. In a case that the total amount of compressed data meets a target condition, the multiple dump transition pages are compressed in the target compression manner, so as to obtain total compressed data. The target condition is as follows. The total amount of compressed data is less than or equal to a target threshold, and the total amount of compressed data plus an amount of compressed data of an additional dump transition page is greater than the target threshold. Afterwards, the total compressed data is stored into the third page of the target pages.

In an optional embodiment, a state of the dump transition page may be monitored based on a compression estimation technology. For example, in a case that a calculated estimate after compression cannot fully fill an external memory page, the dump transition page is extended to be an Extend (an extend page). The multiple dump transition pages corresponding to the particular target column in the internal memory may be extended to be one Extend (for example, a size of the extend page is 8 dump transition pages). That is, the Extend is fully filled when a same column is successively provided with n such dump transition pages. Then, the Extend is compressed with persistence (that is, the compressed data is written into a page in the external memory), and is stored as a common column store page. The header information included in the Extend is recorded before the Extend is compressed and stored. Thereby, compression efficiency can be improved, and storage space can be saved.

In an optional embodiment, a data compression rate is directly related to data distribution in the dump transition page. A universal standard is impractical in determination of a moment at which the data in the dump transition page is compressed with persistence to the external memory. Therefore, compression estimation needs to be performed first, to ensure that the external memory page can be filled as fully as possible, and reduce cross-page reading in a query.

In an optional embodiment, an accurate estimation may be performed according to the data distribution in the dump transition page by using an information entropy theory. For example, in a case that a specific Extend that stores data from a column "Name" of a table "Account" only includes two types of data, i.e. James and Alex, only one binary bit is required, where "1" represents James and "0" represents Alex. In a case that the dump transition page that stores the data from the column "Name" includes three types of data, i.e. James, Alex, and Bob, two binary bits are required. Other cases under uniform distribution can be analogized. It is assumed that a probability of a character (or a character string) occurring in the dump transition page is p, and accordingly a quantity of binary digits required to represent a substitution symbol replacing such character (or the character string) is log₂(1/p).

Generally, it is assumed that the dump transition page contains n types of data, probabilities of occurrence of each type of data are p1, p2, ..., pn, respectively. In such case, a minimum quantity of binary digits occupied by the substitution symbols is: ${\sum }_{k = 1}^{n} {log}_{2} \left(\frac{1}{{p}_{k}}\right) .$

p is obtained through frequency statistic. A mathematical expectation of a quantity of binary digits occupied by each item of data in the dump transition page is as shown in equation (1) (where a data compression rate may be estimated according to equation (1)): $E = {\sum }_{k = 1}^{n} {p}_{k} ∗ {log}_{2} \left(\frac{1}{{p}_{k}}\right)$ (1)

The column "Name" of the table "Account" is taken as an example for description. It is assumed that there are three types of data, i.e. James, Alex, and Bob, in the dump transition page, the total quantity of data items is 1024, a size of the data items is 4 KB, and proportions of the three types of data are 50%, 30%, and 20%, respectively. In such case, a quantity binary digits occupied by each item of data is estimated to be 0.5 * log₂(1/0.5) + 0.3 * log₂(1/0.3) + 0.2 * log₂(1/0.2) = 1.49. Theoretically, each type of data occupies 1.49 binary digits, and thus 1024 data items after compression requires 1526 binary digits, that is, 0.19 KB. Thereby, a compression rate is approximately 20: 1. In this case, approximate 20 dump transition pages in the internal memory are required to be compressed to fully fill one external memory page.

In an optional embodiment, an information table may be maintained for a to-be-dumped data table in the internal memory. The information table is configured to monitor the data distribution of each dump transition page in real time, estimate the compression rate of each dump transition page, and extend the dump transition page to be an extend page (the Extend). The extend page may be an actual page (where information of page header, page body, and page footer of each dump transition page are separately written into corresponding positions of the extend page), or a virtual page (where the dump transition pages corresponding to the same extend page are identified according to the information table). An extend page is compressed with persistence in a case that a theoretical amount of compressed data in such extend page is capable to fully occupy an external memory page. Then, the internal memory space occupied by the extended page is also released. An extend page not capable to fully occupy an external memory page (i.e. a page in the column store database) continues to reside in the internal memory and wait for a next dump.

In an optional embodiment, a Map structure may be further maintained for potential inaccurate estimation. The Map structure is configured to establish a relationship between a table (or a column) under a current dump operation and a corresponding page. It is recorded how much space remains in the corresponding dump transition page after the dump operation. For example, information <t, 2k> in the Map indicates that space of 2k is still unused in the page (i.e. the dump transition page) corresponding to a table t after the dump operation. Hence, a dump thread first looks up the Map before the compression estimation. Two results may be obtained after looking up the Map. In a case that there is no information about the table (or the column) in the Map, it indicates that the table (or the column) is dumped for the first time, or there is no remaining space on the page after a previous dump from the table (or the column). Thereby, a page size may be directly estimated by default for the current dump, and information of a remaining space after this dump is written into the Map. In a case that there is information about the table (or the column) information in the Map, it indicates that there is a remaining space on the page after a previous dump from the table (or the column). Thereby, compression estimation may be performed according to a value of vacant space in the page which is read from the Map. It is appreciated that a fully-filled page herein is not absolutely fully filled. Instead, a threshold (for example, 99%) is set. The page is considered to be fully filled and the information of the table is deleted from the Map, in a case that a ratio of an occupied space in a current page to a total space of the page is greater than or equal to the threshold (for example, the occupied space is greater than or equal to 99% of the total space in the page).

In an optional embodiment, information of only one target column may be stored in the dump transition page (for example, the page B). In such case, corresponding information in the Map is a correspondence between the column and a vacant space in the corresponding page, for example, <column1, 2k>. Relevant operations are similar to the foregoing operations, and are not described again herein.

In an optional implementation, in case of multiple target columns, a target column that has a maximum total amount of compressed data after compression among all target columns may serve as a reference. In a case that the maximum total amount of compressed data meets the target condition, the dump transition pages (or the Extend) corresponding to each target column are compressed and stored into one of the target pages.

An example is as shown in Figure 7. Before the Extend is compressed, a range of the XID in the Extend needs to be determined according to XID_min/XID_max (which is a version identifier, or user-defined information such as ID_min/ID_max) provided in the page header. The range of the XID is stored in the header information in an external memory after compression, and is called an X Range. The X Range can reduce unnecessary decompression operations during a query. The Extend as shown in Figure 7 is an Extend after compression and persistence, that is, is an compressed page in the external memory.

It is not necessary to put a specific limitation regarding temporal-related query on the dump transition page in an internal memory, as long as the data of the history state is ensured to be sequentially written into the dump transition page in the internal memory. Because the XID is unique, the dump transition page and multiple column store pages located in the internal memory may be managed based on HASH.

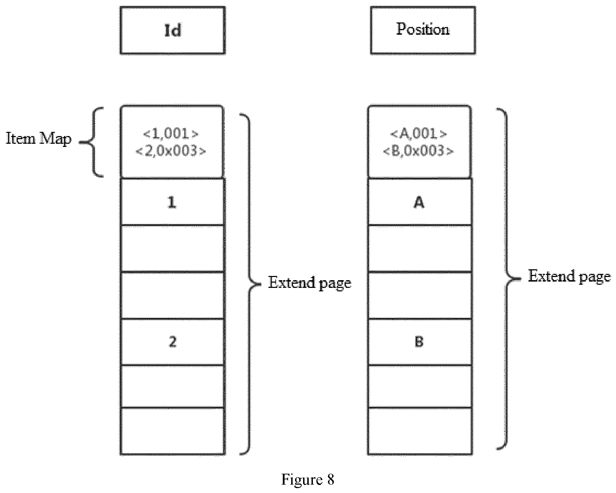

Another example is as shown in Figure 8. Before an Extend is compressed, a key-value pair of each Extend needs to be determined according to the key-value pair <an attribute value from a constraint column, an address of a page offset> provided in the page header. The key-value pair of each Extend is stored in header information of an external memory page after compression. A data structure formed by the name of data and the address of the page offset addresses is called an Item Map.

In an optional embodiment, the address information and the key value of the Item Map in the header of the external memory page are loaded into the internal memory when a column store system is started, to establish a column store index. Thereby, a query process is accelerated.

In another optional implementation, each target column within the multiple target rows may be separately subject to extension as the Extend, estimation of an amount of compressed data, compression, and persistence. The dump transition pages corresponding to the target columns do not affect each other. A corresponding manner of data storage for the pages in the column store database is similar to that in Figure 7 and Figure 8, and the range of the column store index and the page offset in the key-value pair in the page header may be different in each page.

The target row may be cleared when the target time comes. Query information may be received after the target row is cleared, where the query information is for performing a data query on the data table. Data from the data table may be stored in the data table of the row store database and the target page in the column store database, and may be stored in a data page (for example, in the PostgreSQL) or a rollback segment (in the MySQL).

In an optional embodiment, after the query information is received, the target pages in the column store database and the data table in the row store database (or, the data page or the rollback segment) may be sequentially searched according to the query information. Thereby, a query result corresponding to the query information is obtained and outputted. Both the row store database and the column store database may be located in the internal memory. Alternatively, the row store database is located in the internal memory, and the column store database is located in the external memory.

In a case the dump transition page is applied to data dump, the data from the data table may be stored in the data table of the row store database, the dump transition page, and the target pages in the column store database. The data may be stored in a data page (for example, in the PostgreSQL) or a rollback segment (in the MySQL).

In an optional embodiment, after the query information is received, the target pages in the column store database, the data table in the row store database, and the dump transition page (or, the data page or the rollback segment) may be sequentially searched according to the query information. Thereby, a query result corresponding to the query information is obtained and outputted. The row store database and the dump transition page are located in the internal memory, and the column store database is located in the external memory.

In an optional embodiment, in a case that the received query information includes a query value (a specific value, or a range value) for a target identifier, following operations are performed after the query information is received. A row store index, a column store index, and the dump transition page for the data table are obtained. The row store index is an index of row-based data, which is stored in the data table in the row store database. The column store index is an index of identifier values of the target identifier that correspond to the attribute values from the target column, which is stored of the target pages. The column store index, the row store index, and the dump transition page are sequentially searched based on the query value, so as to determine a target position of target data corresponding to the query information. A query result corresponding to the query information is obtained from the determined target position. The obtained query result is outputted.

In an optional embodiment, obtaining the row store index, the column store index, and the dump transition page for the data table may include following steps. A storage address of the data table is obtained, for example, a storage address of data table is obtained from metadata of the data table, where the metadata is in a data dictionary. The data table (the data table in the row store index) is loaded into a data cache area, and a row store index of the data table is obtained. The dump transition page and the column store index is obtained (where the dump transition page and the column store index may reside in the internal memory). The column store index may include, but is not limited to, an index of a version identifier or key-value pairs.

In an optional embodiment, the column store index and the row store index may be looked up based on the query value. In a case that the query value is found in the column store index, a corresponding column store page is found according to the column store index, and data is read from such page. In a case that the query value is found in the row store index, a page with a row store format is traversed based on a position to which the row store index points, and data is read. Further, the dump transition page is traversed, and the data is read in case of existing.

In an optional embodiment, a corresponding compressed page may be searched according to an indication of the X range, and the corresponding compressed page is decompressed to read data. Alternatively, a corresponding compressed page may be searched according to an indication of the Item Map, and the corresponding compressed page is decompressed to read data.

In an optional embodiment, first the column store index may be searched, and then row store index is searched. An SQL statement may give a Hint instruction, to determine which index is searched first. For a query related to the version identifier, the column store index (for example, the X Range), the row store index, and the dump transition page may be sequentially searched, until a corresponding query result is found. For a query related to an attribute value from the constraint column, the column store index (for example, the Item Map), the row store index, and the dump transition page may be sequentially searched, until all corresponding query results are found.

An example is as shown in Figure 7. An SQL query statement "SELECT Name FROM Account WHERE XID <20 AND XID> 10" is executed. In a conventional query process, each Extend for the "Name" is decompressed first during searching column store, an XID meeting the condition is found, and then a value of the "Name" is obtained. In such case, decompression consumes a large quantity of resources, affecting a query speed. In a case that such SQL query statement is executed based on the X Range, it may be learned in advance that only Extend 1 contains the value of the "Name" that meets the condition, and thereby only the Extend 1 needs to be decompressed. Further, it is unnecessary to query the row store index and the dump transition page in such case, thereby greatly reducing time consumption of decompression and query.

Data query based on the constraint column provides a good support for data which is regularly generated, such as meteorological information and information collected and updated by an Internet of Things node at regular intervals. Data query based on the constraint column provides a poor support for data which is irregularly generated.

For example, an SQL statement "SELECT Temperature FROM Temp WHERE ID = 1" is executed. In a case that the query is based on the X range, values of the "Temperature" with ID = 1 may be covered by ranges of several compressed pages, and thereby heavy decompression is performed during the query. In a case that the query is based on the Item Map, only key values of the Item Map in the header information need to be searched. A value of the page offset for ID = 1 is obtained, and a data region for ID = 1 is calculated. Then, data within the corresponding region of the column "Temperature" is found accordingly.

All pages in the external memory that belong to the same column form a Segment, so as to facilitate management. The Segment is only a logical division, and a physical implementation thereof is not discussed herein. A user sets a storage parameter according to a specific query analysis scenario before the dump starts, so as to determine a dump policy. The dump policy is based on a version identifier by default.

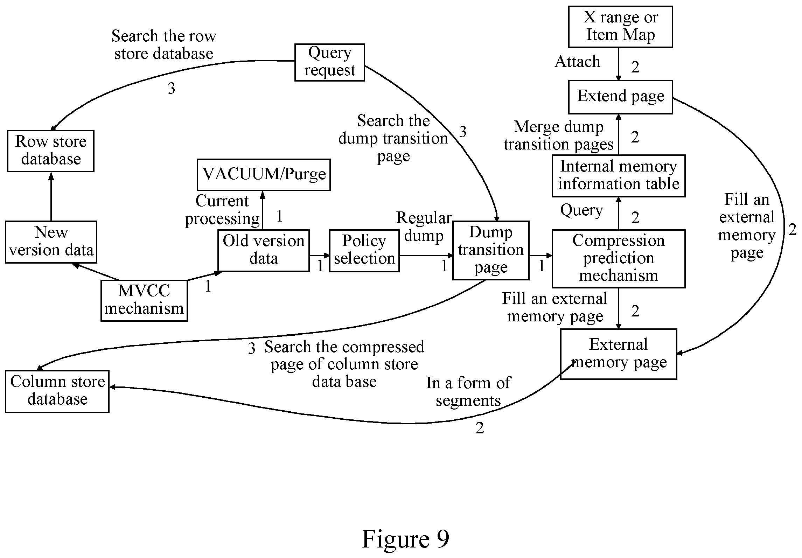

Hereinafter a method for data processing is described in conjunction with an example. The complete method for data processing mainly includes three steps 1 to 3, as shown in Figure 9.

In step 1 (arrows in labeled with "1"), data is written into a dump transition page at regular intervals, based on a policy selected by a user.

In step 2 (arrows in labeled with "2"), the dump transition page or the Extend is subject to persistence into an external memory, through a mechanism of compression estimation mechanism. An index based on the X Range or the Item Map index is established.

In step 3 (arrows in labeled with "3"), in response to a query request, a query is performed in the row store database or in the dump transition page and the column store database, according to an SQL Hint instruction. The query is performed on the dump transition page and the column store database by default.

In this example, the dump transition page is managed based on a range of the XID (or another index) of the tuples in the column store database, and thereby an addressing speed can be effectively improved. Modes of the X range and the Item Map, which are based on the mechanism of compression estimation, are applied to different data scenarios, so as to ensure that irrelevant compressed pages are not decompressed during querying in the column store database. Thereby, a query performance is improved. In an upper layer, an application system may read the newest data in the row store database, and an analysis system may analyze data based on the column store database, so as to obtain useful information. The application system and the analysis system do not affect each other, and a value of the data is fully exploited.

In this embodiment, a target row to be cleared at a target time is obtained from a data table of a row-based database. A target attribute value recorded in a target column within at least one target row is stored into a target page in a column-based database. The target attribute values recorded in a same column within the target rows are recorded in at least one of the target pages in the column-based database. The target row is cleared at the target time. History data in the database is reserved, and completeness of data change history is ensured.

In an optional embodiment, storing the target attribute value recorded in the target column of the at least one target row into the target page in the column-based database includes a following step S1.

In step S1, the target attribute values recorded in different target columns within multiple target rows are stored into different target pages. Further, in a case that a first page of the target pages is fully filled with some of the target attribute values recorded in the particular target column within the multiple target rows, the target attribute values recorded in such target column, other than those stored in the first page, within the multiple target rows are stored into a second page of the target pages.

In this embodiment, the target attribute values recorded in different target columns are stored in different target pages, and the attribute values recorded in the particular target column may be stored in different pages. Thereby, a storage mode of the attribute values of the target columns can be properly planned, facilitating management of the target pages.

In an optional embodiment, storing the target attribute values recorded in the multiple target columns of the at least one target row into the target page in the column-based database includes following steps S1 and S2.

In step S 1, the target attribute values recorded in the particular target column within multiple target rows are stored into a dump transition page. The dump transition page is configured to dump attribute values recorded in the target column to the target page in the column-based database.

In step S2, in a case that the dump transition page is fully filled with all or some of the target attribute values recorded in the particular target column within the multiple target rows, attribute values recorded in the dump transition page into a third page of the target pages. The attribute values recorded in the dump transition page includes the target attribute values recorded in the particular target column.

In this embodiment, the target attribute values in the target column that are recorded in the dump transition page are dumped only when the dump transition page is fully filled. Thereby, it is ensured that the third page of the target pages is fully filled, avoiding a waste of storage space.

In an optional embodiment, storing the target attribute values recorded in the particular target column of the at least one target row into the dump transition page includes following steps S1 and S2.

In step S1, header information of the dump transition page is determined. The header information is configured to identify an identifier value range of a target identifier corresponding to the attribute values recorded in the dump transition page.

In step S2, the header information and the attribute values recorded in the dump transition page are stored into the third page of the target pages.

In an optional embodiment, the header information includes a maximum value and a minimum value of a version identifier corresponding to the attribute values recorded in the dump transition page. The target identifier is the version identifier, and the version identifier is configured to identify uniquely column versions from different target columns within the multiple target rows. Alternatively, the header information includes one or more key-value pairs. Each key-value pair includes an attribute value, which is from a first column in the multiple target columns, within the multiple target rows and a page offset corresponding to the attribute value from the first column. The attribute value from the first column corresponds to a column version, of an attribute value from a second column, stored in the dump transition page. The attribute value from the first column and the attribute value from the second column are adjacently stored in the dump transition page. The page offset is an offset of a storage location, of the attribute value from the second column, in the dump transition page.

In this embodiment, the header information is set to form an index of the attribute values stored in the page in the column-based database, facilitating management of the target page.

In an optional embodiment, storing the attribute values recorded in the dump transition page into the third page of the target pages includes following steps S1 to S3.

In step S 1, a total amount of compressed data, obtained after data of each dump transition page in multiple dump transition pages is compressed in a target compression manner, is estimated. Each dump transition page in the multiple dump transition pages stores attribute values corresponding to a same one of the target columns within the multiple target rows. The multiple dump transition pages include the dump transition page in which the recorded attribute values are to be stored into the third page of the target pages.

In step S2, each dump transition page in the multiple dump transition pages is separately compressed in the target compression manner to obtain total compressed data, in a case that the total amount of compressed data meets a target condition. The target condition is that the total amount of compressed data is less than or equal to a target threshold, and the total amount of compressed data plus an amount of compressed data of an additional dump transition page is greater than the target threshold.

In step S3, the total compressed data is stored into the third page of the target pages.

In this embodiment, the total amount of compressed data, obtained after the attribute values in the multiple dump transition pages corresponding to the same column within the multiple target rows are compressed, is estimated. The attribute values in the multiple dump transition pages are stored into one of the target pages after being compressed, in a case that the total amount of compressed data would exceed the target threshold. Thereby, storage space is saved.

In an optional embodiment, after clearing the at least one target row, the method further includes following steps S1 to S3.

In step S 1, query information for performing a data query on the data table is received.

In step S2, the target page in the column-based database, and the data table in the row-based database, are sequentially searched based on the query information, to obtain a query result corresponding to the query information.

In step S3, the query result is outputted.

In this embodiment, the data table in the row-based database and the target page in the column-based database are separately searched based on the query information. Thereby, it is ensured that the query result is comprehensive.

In an optional embodiment, after clearing the at least one target row, the method further includes following steps S1 to S3.

In step S 1, query information for performing a data query on the data table is received.

In step S2, the target page in the column-based database, the data table in the row-based database, and the dump transition page are sequentially searched based on the query information, to obtain a query result corresponding to the query information.

In step S3, the query result is outputted.

In this embodiment, the data table in the row-based database, the target page in the column-based database, and the dump transition page are separately searched based on the query information. Thereby, it is ensured that the query result is comprehensive.

In an optional embodiment, after clearing the at least one target row, the method further includes following steps S1 to S5.

In step S 1, query information for performing a data query on the data table is received. The query information includes a query value corresponding to the target identifier.

In step S2, a row store index, a column store index, and the dump transition page are obtained. The row store index is an index of row-based data, which is stored in the data table in the row-based database. The column store index is an index of identifier values of the target identifier that correspond to the attribute values from the multiple target columns stored in each target pages.

In step S3, the column store index, the row store index, and the dump transition page are sequentially searched based on the query value, to determine a target position at which a query result corresponding to the query information is stored.

In step S4, the query result corresponding to the query information is obtained based on the target position.

In step S5, the query result is outputted.

In this embodiment, the column store index, the row store index, and the dump transition page are separately searched according to the query information which includes the query value corresponding to the target identifier. Thereby, the query efficiency and comprehensiveness of the query result are ensured.

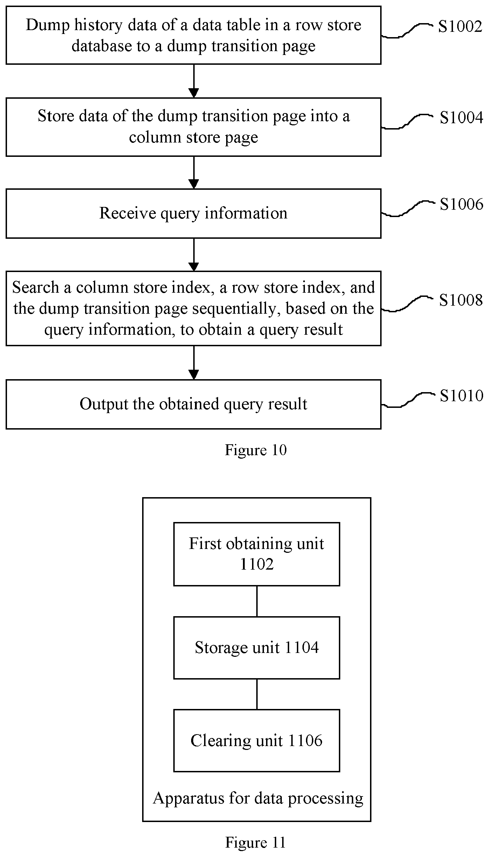

Hereinafter the foregoing method for data processing is described with reference to Figure 10. In step S 1002, a processor of a network element node dumps history data of a data table in a row store database to a dump transition page. In step S 1004, the processor stores data of the dump transition page into a column store page. In step S 1006, the processor receives query information. In step S 1008, the processor searches a column store index, a row store index, and the dump transition page sequentially, based on the query information, to obtain a query result. In step S 1010, the processor outputs the obtained query result.

It is noted that the foregoing method embodiments are stated as a series of action combinations for concise descriptions. Those skilled in the art should know that the present disclosure is not limited to a sequence of the described actions, because some steps may be performed in another sequence or simultaneously according to an embodiment of the present disclosure. In addition, those skilled in the art should also know that all embodiments described in this specification are exemplary embodiments, and the related actions and modules may not be necessarily required in the present disclosure.

From the foregoing description, those skilled in the art may clearly appreciate that the method according to the foregoing embodiments may be implemented through software plus a necessary general hardware platform, or through hardware, and the former is preferable in many cases. Based on such understanding, an essence or a part contributing over the conventional technology, of technical solutions in the present disclosure, may be implemented as a software product. The computer software product is stored in a storage medium (such as a ROM/RAM, a magnetic disk, or an optical disc), and includes several instructions for instructing a terminal device (which may be a mobile phone, a computer, a server, a network device, and the like) to perform the method described in embodiments of the present disclosure.

In another aspect of embodiments of the present disclosure, an apparatus for data processing is further provided for implementing the method for data processing. As shown in Figure 11, the apparatus includes a first obtaining unit 1102, a storage unit 1104, and a clearing unit 1106.
(1) The first obtaining unit 1102 is configured to obtain at least one target row to be cleared at a target time from a data table of a row-based database;
(2) The storage unit 1104 is configured to store a target attribute value recorded in the at least one target row into a target page in a column-based database.
(3) The clearing unit 1106 is configured to clear the at least one target row at the target time.

In conventional technology, history data in the database is eliminated through a clear operation. Such manner results in missing of history data in the database, and thereby it is difficult to trace the history data. According to embodiments of the present disclosure, the at least one target row to be cleared at the target time is obtained from the data table of the row-based database, the target attribute value recorded in the at least one target row are stored into the target page in the column-based database, and the at least one target row is cleared at the target time. Thereby, the history data in the database is reserved, and completeness of change information of the history data is ensured. The technical problem that it is difficult to trace the history data in conventional data processing technology is addressed.

In an optional embodiment, the first obtaining unit 1102 may be configured to perform the step S202, the storage unit 1104 may be configured to perform the step S204, and the clearing unit 1106 may be configured to perform the step S206. Optional manners of performing the above steps are not described again herein.

In an optional implementation, the storage unit 1104 includes a first storage module and a second storage module.
(1) The first storage module is configured to store the target attribute values recorded in the particular target column within multiple target rows into a dump transition page. The dump transition page is configured to dump attribute values recorded in the target column to the target page in the column-based database.
(2) The second storage module is configured to store attribute values recorded in the dump transition page into a third page of the target pages, in a case that the dump transition page is fully filled with all or some of the target attribute values recorded in the particular target column within the multiple target rows.

In this embodiment, the target attribute values in the target column that are recorded in the dump transition page may be dumped only when the dump transition page is fully filled. Thereby, it is ensured that the third page of the target pages is fully filled, avoiding a waste of storage space.

In an optional implementation, the second storage module includes a first determining submodule and a first storage submodule.
(1) The first determining submodule is configured to determine header information of the dump transition page. The header information is configured to identify an identifier value range of a target identifier corresponding to the attribute values recorded in the dump transition page.
(2) The first storage submodule is configured to store the header information and the attribute values recorded in the dump transition page into the third page of the target pages.

In an optional embodiment, the header information includes a maximum value and a minimum value of a version identifier corresponding to the attribute values recorded in the dump transition page. The target identifier is the version identifier, and the version identifier is configured to identify uniquely column versions from a target column within the multiple target rows. Alternatively, the header information includes one or more key-value pairs. Each key-value pair includes an attribute value from a first column in the target columns within the multiple target rows and a page offset corresponding to the attribute value from the first column. The attribute value from the first column corresponds to a column version, of an attribute value from a second column, stored in the dump transition page. The attribute value from the first column and the attribute value from the second column are adjacently stored in the dump transition page. The page offset is an offset of a storage location, of the attribute value from the second column, in the dump transition page.

In this embodiment, the header information is set to form an index of the attribute values stored in the page in the column-based database, facilitating management of the target page.

In an optional implementation, the second storage module includes a second determining submodule, a compression submodule, and a second storage submodule.
(1) The second determining submodule is configured to estimate a total amount of compressed data obtained after data of each dump transition page in multiple dump transition pages is compressed in a target compression manner. Each dump transition page in the multiple dump transition pages stores attribute values corresponding to a same one of the target columns within the multiple target rows. The multiple dump transition pages include the dump transition page in which the recorded attribute values are to be stored into the third page of the target pages.
(2) The compression submodule is configured to compress each dump transition page in the multiple dump transition pages separately in the target compression manner, to obtain total compressed data, in a case that the total amount of compressed data meets a target condition. The target condition is that the total amount of compressed data is less than or equal to a target threshold, and the total amount of compressed data plus an amount of compressed data of an additional dump transition page is greater than the target threshold.
(3) The second storage submodule is configured to store the total compressed data into the third page of the target pages.

In this embodiment, the total amount of compressed data, obtained after the attribute values in the multiple dump transition pages corresponding to the same column within the multiple target rows are compressed, is estimated. The attribute values in the multiple dump transition pages are stored into one of the target pages after being compressed, in a case that the total amount of compressed data would exceed the target threshold. Thereby, storage space is saved.

In an optional implementation, the storage unit 1104 includes a third storage module.

The third storage module is configured to store the target attribute values recorded in different target columns within multiple target rows into different target pages. The third storage module is further configured to, in a case that a first page of the target pages is fully filled with some of the target attribute values recorded in the particular target column within the multiple target rows, store the target attribute values recorded in such target column, other than those stored in the first page, within the multiple target rows into a second page of the target pages.

In this embodiment, the target attribute values recorded in different target columns are stored in different target pages, and the attribute values recorded in the particular target column may be stored in different pages. Thereby, a storage mode of the attribute values of the target columns can be properly planned, facilitating management of the target pages.

In an optional embodiment, the apparatus further includes a receiving unit, a second obtaining unit, and an output unit.
(1) The receiving unit is configured to receive query information for performing a data query on the data table, after the at least one target row is cleared.
(2) The second obtaining unit is configured to query the target page in the column-based database and the data table in the row-based database sequentially, based on the query information, to obtain a query result corresponding to the query information.
(3) The output unit is configured to output the query result.

In this embodiment, the data table in the row-based database and the target page in the column-based database are separately searched based on the query information. Thereby, it is ensured that the query result is comprehensive.

In an optional implementation, the apparatus further includes a first receiving unit, a first query unit, and a first output unit.
(1) The first receiving unit is configured to receive query information for performing a data query on the data table, after the at least one target row is cleared.
(2) The first query unit is configured to query the target page in the column-based database, the data table in the row-based database, and the dump transition page sequentially, based on the query information, to obtain a query result corresponding to the query information.
(3) The first output unit is configured to output the query result.

In this embodiment, the data table in the row-based database, the target page in the column-based database, and the dump transition page are separately searched based on the query information. Thereby, it is ensured that the query result is comprehensive.

In an optional embodiment, the apparatus further includes a second receiving unit, a third obtaining unit, a second query unit, a fourth obtaining unit, and a second output unit.
(1) The second receiving unit is configured to receive query information for performing a data query on the data table, after the at least one target row is cleared. The query information includes a query value corresponding to the target identifier.
(2) The third obtaining unit is configured to obtain a row store index, a column store index, and the dump transition page. The row store index is an index of row-based data, which is stored in the data table in the row-based database. The column store index is an index of identifier values of the target identifier that correspond to the attribute values from the multiple target columns stored in each target pages.
(3) The second query unit is configured to query the column store index, the row store index, and the dump transition page sequentially, based on the query value, to determine a target position at which a query result corresponding to the query information is stored.
(4) The fourth obtaining unit is configured to obtain the query result corresponding to the query information, based on the target position.
(5) The second output unit is configured to output the query result.

In this embodiment, the column store index, the row store index, and the dump transition page are separately searched according to the query information which includes the query value corresponding to the target identifier. Thereby, the query efficiency and comprehensiveness of the query result are ensured.

Those skilled in the art may understand that all or some of the steps of the methods in the foregoing embodiments may be implemented by a program instructing relevant hardware of the terminal device. The program may be stored in a computer-readable storage medium. The storage medium may include a flash drive, a read-only memory (ROM), a random access memory (RAM), a magnetic disk, a compact disc, or the like.

In another aspect of embodiments of the present disclosure, a storage medium is further provided. The storage medium stores a computer program. The computer program when being executed implements any foregoing method embodiment.

In an optional embodiment, the storage medium may be configured to store a computer program for performing following steps S1 to S3.

In step S 1, at least one target row to be cleared at a target time is obtained from a data table of a row-based database.

In step S2, a target attribute value recorded in the at least one target row is stored into a target page in a column-based database.

In step S3, the at least one target row is cleared at the target time.

Those skilled in the art may understand that all or some of the steps of the methods in the foregoing embodiments may be implemented by a program instructing relevant hardware of the terminal device. The program may be stored in a computer-readable storage medium. The storage medium may include a flash drive, a ROM, a RAM, a magnetic disk, a compact disc, or the like.

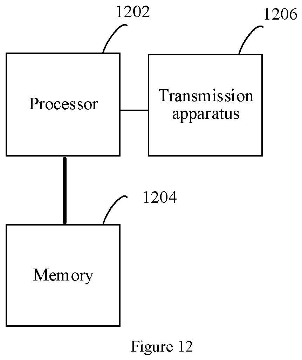

In another aspect of embodiments of the present disclosure, an electronic apparatus is further provided for implementing the foregoing method for data processing. As shown in Figure 12, the electronic apparatus includes a processor 1202, a memory 1204, and a transmission apparatus 1206. The memory stores a computer program. The processor is configured to implement any foregoing method embodiment through the computer program.

In an optional embodiment, the electronic apparatus may be located in at least one of multiple network devices in a computer network.

In an optional embodiment, the processor may be configured to implement following steps S1 to S3 through the computer program.

In step S 1, at least one target row to be cleared at a target time is obtained from a data table of a row-based database.

In step S2, a target attribute value recorded in the at least one target row is stored into a target page in a column-based database.

In step S3, the at least one target row is cleared at the target time.

Those skilled in the art can understand that the structure as shown in Figure 12 is merely exemplary, and the electronic apparatus may alternatively be a server that provides a query service. Figure 12 does not constitute a limitation on the structure of the electronic apparatus. For example, the electronic apparatus may include more or fewer components (such as a network interface) than those shown in Figure 12, or has a configuration different from that shown in Figure 12.

The memory 1204 may be configured to store a software program and a module, for example, a program instruction/module corresponding to the method and the apparatus for data processing in embodiments of the present disclosure. The processor 1202 performs various functional applications and data processing by running the software program and the module stored in the memory 1204, so as to implement the foregoing method for data processing. The memory 1204 may include a high speed random access memory, and may further include a non-volatile memory, for example, one or more magnetic storage apparatuses, a flash memory, or another non-volatile solid-state memory. In some embodiments, the memory 1204 may further include a memory that is remotely configured for the processor 1202, and the remote memory may be connected to a terminal via a network. Examples of the network include, but are not limited to, the Internet, an intranet, a local area network, a mobile communication network, and a combination thereof.

The transmission apparatus 1206 is configured to receive or transmit data via a network, and may be configured to transmit data between the processor and the memory. A specific example of the network may include a wired network or a wireless network. In an embodiment, the transmission apparatus 1206 includes a network interface controller (NIC). The NIC may be connected to another network device and a router via a network cable, so as to communicate with the Internet or the local network. In an embodiment, the transmission apparatus 1206 is a radio frequency (RF) module, which is configured to communicate wirelessly with the Internet.

Sequential numbers of the foregoing embodiments of the present disclosure are merely for description purpose and do not indicate preference among the embodiments.

An integrated unit in the foregoing embodiments may be stored in the foregoing computer-readable storage medium, when implemented as a software functional unit and sold or used as an independent product. Based on such an understanding, an essence or a part contributing to conventional technology of technical solutions of the present disclosure, or all or a part of technical solutions, may be implemented as a software product. The computer software product is stored in a storage medium and includes several instructions for instructing one or more computer devices (which may be a personal computer, a server, a network device, or the like) to perform all or some of steps of the methods in embodiments of the present disclosure.

Foregoing embodiments of the present disclosure lay emphasis on different aspects. A part which is not described in detail in one embodiment may refer to relevant description of another embodiment.

The client in some embodiments of the present disclosure may be implemented in other manners. The apparatus embodiments described above are merely exemplary. For example, units are merely divided according to logic functions, and may be divided in other manners in practice. For example, multiple units or components may be combined or integrated into another system, or, some features can be omitted or not performed. In addition, the displayed or discussed coupling, direct coupling, or communication connection may be indirect coupling or communication connection via some interfaces, units, or modules, and may be electrical or in other forms.

The units described as separate parts may or may not be physically separate. Components displayed as units may or may not be physical units, that is, may be located in one position or distributed among multiple network units. Some or all of the units may be selected according to a practical requirement to achieve an objective of solutions in the embodiments.

In embodiments of the present disclosure, all functional units may be integrated into one processing unit, or each functional unit may be physically independent, or two or more units are integrated into one unit. The integrated unit may be implemented as hardware or a software function unit.

Described above are merely exemplary embodiments of the present disclosure. Those skilled in the art may make various improvements and modifications without departing from the principle of the present disclosure, and the improvements and the modifications shall fall within the protection scope of the present disclosure.

## Claims

1. A method for data processing, applied to an electronic apparatus, wherein the method comprises:
obtaining at least one target row to be cleared at a target time from a data table of a row-based database;
storing a target attribute value recorded in the at least one target row into a target page in a column-based database; and
clearing the at least one target row at the target time.

2. The method according to claim 1, wherein storing the target attribute value recorded in the at least one target row into the target page in the column-based database comprises:
storing the target attribute values recorded in different target columns within a plurality of target rows into different target pages, wherein:
in a case that a first page of the target pages is fully filled with some of the target attribute values recorded in a particular one of the different target columns within the plurality of target rows, the target attribute values recorded in the particular target column, other than those stored in the first page, within the plurality of target rows are stored into a second page of the target pages.

3. The method according to claim 1, wherein storing the target attribute value recorded in the at least one target row into the target page in the column-based database comprises:
storing the target attribute values recorded in a particular target column within a plurality of target rows into a dump transition page, wherein the dump transition page is configured to dump attribute values recorded in the particular target column to the target page in the column-based database; and
storing attribute values recorded in the dump transition page into a third page of the target pages, in a case that the dump transition page is fully filled with all or some of the target attribute values recorded in the particular target column within the plurality of target rows.

4. The method according to claim 3, wherein storing the attribute values recorded in the dump transition page into the third page of the target pages comprises:
determining header information of the dump transition page, wherein the header information is configured to identify an identifier value range of a target identifier corresponding to the attribute values recorded in the dump transition page; and
storing the header information and the attribute values recorded in the dump transition page into the third page of the target pages.

5. The method according to claim 4, wherein:
the header information comprises a maximum value and a minimum value of a version identifier corresponding to the attribute values recorded in the dump transition page, wherein the target identifier is the version identifier, and the version identifier is configured to identify uniquely column versions from different target columns within the plurality of target rows; or
the header information comprises one or more key-value pairs, wherein:
each key-value pair comprises an attribute value from a first column in the target columns within the plurality of target rows and a page offset corresponding to the attribute value from the first column;
the attribute value from the first column corresponds to a column version, of an attribute value from a second column, stored in the dump transition page;
the attribute value from the first column and the attribute value from the second column are adjacently stored in the dump transition page;
the page offset is an offset of a storage location, of the attribute value from the second column, in the dump transition page

6. The method according to claim 3, wherein storing the attribute values recorded in the dump transition page into the third page of the target pages comprises:
estimating a total amount of compressed data obtained after data of each dump transition page in a plurality of dump transition pages is compressed in a target compression manner, wherein:
each dump transition page in the plurality of dump transition pages stores attribute values corresponding to the particular one of the target columns within the plurality of target rows, and
the plurality of dump transition pages comprises the dump transition page in which the recorded
attribute values are to be stored into the third page of the target pages;
compressing each dump transition page in the plurality of dump transition pages separately in the target compression manner, to obtain total compressed data, in a case that the total amount of compressed data meets a target condition, wherein the target condition is:
the total amount of compressed data being less than or equal to a target threshold, and
the total amount of compressed data plus an amount of compressed data of an additional dump transition page being greater than the target threshold; and
storing the total compressed data into the third page of the target pages.

7. The method according to claim 1, wherein after clearing the at least one target row, the method further comprises:
receiving query information for performing a data query on the data table;
searching the target page in the column-based database and the data table in the row-based database sequentially, based on the query information, to obtain a query result corresponding to the query information; and
outputting the query result.

8. The method according to claim 3, wherein after clearing the at least one target row, the method further comprises:
receiving query information for performing a data query on the data table;
searching the target page in the column-based database, the data table in the row-based database, and the dump transition page sequentially, based on the query information, to obtain a query result corresponding to the query information; and
outputting the query result.

9. The method according to claim 4, wherein after clearing the at least one target row, the method further comprises:
receiving query information for performing a data query on the data table, after the at least one target row is cleared, wherein the query information comprises a query value corresponding to the target identifier;
obtaining a row store index, a column store index, and the dump transition page, wherein the row store index is an index of row-based data which is stored in the data table in the row-based database, and the column store index is an index of identifier values of the target identifier that correspond to the attribute values from the plurality of target columns stored in each target pages;
searching the column store index, the row store index, and the dump transition page sequentially, based on the query value, to determine a target position at which a query result corresponding to the query information is stored;
obtaining the query result corresponding to the query information, based on the target position; and
outputting the query result.

10. The method according to any one of claims 1 to 9, wherein:
to-be-dumped data in the row-based database is located in an internal memory of a target device;
persistent data in the column-based database is located in an external memory of the target device; and
the to-be-dumped data comprises the at least one target row that is to be cleared.

11. An apparatus for data processing, comprising:
a first obtaining unit, configured to obtain at least one target row to be cleared at a target time from a data table of a row-based database;
a storage unit, configured to store a target attribute value recorded in the at least one target row into a target page in a column-based database; and
a clearing unit, configured to clear the at least one target row at the target time.

12. The apparatus according to claim 11, wherein the storage unit comprises:
a first storage module, configured to store the target attribute values recorded in a particular target column within a plurality of target rows into a dump transition page, wherein the dump transition page is configured to dump attribute values recorded in the target column to the target page in the column-based database; and
a second storage module, configured to store attribute values recorded in the dump transition page into a third page of the target pages, in a case that the dump transition page is fully filled with all or some of the target attribute values recorded in the particular target column within the plurality of target rows.

13. The apparatus according to claim 11 or 12, further comprising:
a receiving unit, configured to receive query information for performing a data query on the data table;
a second obtaining unit, configured to query the target page in the column-based database and the data table in the row-based database sequentially, based on the query information, to obtain a query result corresponding to the query information; and
an output unit, configured to output the query result.

14. A storage medium, storing a computer program, wherein the computer program when being executed implements the method according to any one of claims 1 to 10.

15. An electronic apparatus, comprising:
a memory, and
a processor,
wherein the memory stores a computer program, and the processor is configured to implement the method according to any one of claims 1 to 10 through the computer program.
